# EUROPEAN PATENT APPLICATION

(11) **EP 4 498 332 A1**
(43) Date of publication of application: **29.01.2025**
(21) Application number: 23773559.2
(22) Date of filing: 27.02.2023
(51) Int. Cl.: G06V 10/80

(54) **IMAGE DESCRIPTION GENERATION METHOD AND APPARATUS, DEVICE, MEDIUM, AND PRODUCT**

(30) Priority: 21.03.2022 CN 202210278138
(71) Applicant: BEIJING YOUZHUJU NETWORK TECHNOLOGY CO. LTD., Beijing 101299 (CN)
(72) Inventor: MAO, Xiaofei, Beijing 100028 (CN); HUANG, Can, Beijing 100028 (CN)
(74) Representative: Dentons UK and Middle East LLP
(86) International application number: PCT/CN2023/078335
(87) International publication number: WO 2023/179308

(57) **Abstract**

The present disclosure provides an image description generation method and apparatus, a device, a medium, and a product, and relates to the technical field of image processing. The method includes obtaining an image including a target object; respectively extracting a label feature of the target object, a position feature of the target object in the image, a text feature in the image, and a visual feature of the target object from the image; and generating a natural language description for the image according to the label feature, the position feature, the text feature, the visual feature, and a visual linguistic model. It is apparent that through the method, more effective information is extracted from the image, such that the model can better understand the image, thereby improving a matching degree between the obtained natural language description and the target object in the image.

## Description

### CROSS-REFERENCE TO RELATED APPLICATION(S)

The present disclosure claims the priority of Chinese Patent Application No. 202210278138.2, filed with China National Intellectual Property Administration on March 21, 2022 and entitled "IMAGE DESCRIPTION GENERATION METHOD AND APPARATUS, DEVICE, MEDIUM, AND PRODUCT", which is incorporated in its entirety herein by reference.

### FIELD

The present disclosure belongs to the technical field of image processing, and particularly relates to an image description generation method and apparatus, a device, a computer-readable storage medium, and a computer program product.

### BACKGROUND

With the development of computer technology, especially image processing technology, an information transmission method with images as carriers accounts for an increasing proportion. In some scenarios, such as e-commerce, a matching degree between a product image and a natural language description for a product can affect an augmentation effect of the product. When the matching degree between the natural language description for the product and the product is high, a user can understand the product more directly, thereby improving the augmentation effect of the product.

The image includes rich visual information, and currently, the natural language description can be generated based on the visual information. However, the matching degree between the natural language description generated only based on the visual information and the product in the image is low. Therefore, an image description generation method is urgently needed to improve the matching degree between the natural language description and the product.

### SUMMARY

Objectives of the present disclosure are to provide an image description generation method and apparatus, a device, a computer-readable storage medium, and a computer program product so as to improve a matching degree between an obtained natural language description and a target object in an image.

In a first aspect, the present disclosure provides an image description generation method. The method includes:
obtaining an image including a target object;
respectively extracting a label feature of the target object, a position feature of the target object in the image, a text feature in the image, and a visual feature of the target object from the image; and
generating a natural language description for the image according to the label feature, the position feature, the text feature, the visual feature, and a visual linguistic model.

In a second aspect, the present disclosure provides an image description generation apparatus, including:
an obtaining module, configured to obtain an image including a target object;
an extraction module, configured to respectively extract a label feature of the target object, a position feature of the target object in the image, a text feature in the image, and a visual feature of the target object from the image; and
a generation module, configured to generate a natural language description for the image according to the label feature, the position feature, the text feature, the visual feature, and a visual linguistic model.

In a third aspect, the present disclosure provides a computer-readable medium, having a computer program stored therein. The program, when executed by a processing apparatus, implements the steps of the method in any one of items in the first aspect of the present disclosure.

In a fourth aspect, the present disclosure provides an electronic device, including:
a storage apparatus storing a computer program thereon; and
a processing apparatus for executing the computer program in the storage apparatus to implement the steps of the method in any of items in the first aspect of the present disclosure.

In a fifth aspect, the present disclosure provides a computer program product including instructions. The computer program product, when running on a device, causes the device to perform the method according to any of implementations in the first aspect.

According to the foregoing technical solutions, it can be seen that the present disclosure has the following advantages:
the present disclosure provides the image description generation method, and the method includes first obtaining the image including the target object, such as an image of a product; and then, respectively extracting the label feature of the target object, the position feature of the target object in the image, the text feature in the image, and the visual feature of the target object from the image. Apparently, through the method, more effective information is extracted from the image. Then, the natural language description for the image is generated based on the label feature, the position feature, the text feature, the visual feature, and the visual linguistic model. The natural language description obtained based on the more effective information is more accurate, thereby making the natural language description better match the target object in the image.

Other features and advantages of the present disclosure will be described in detail in the following detailed description of preferred embodiments.

### BRIEF DESCRIPTION OF THE DRAWINGS

The accompanying drawings are used to provide a further understanding of the present invention, form a part of the specification, are used to explain the present invention in conjunction with the embodiments of the present invention, but do not limit the present invention. In the accompanying drawings:
FIG. 1 is an architecture diagram of a recommendation system according to an embodiment of the present disclosure;
FIG. 2 is a flowchart of an image description generation method according to an embodiment of the present disclosure;
FIG. 3A is a schematic diagram of an image obtaining interface according to an embodiment of the present disclosure;
FIG. 3B is a schematic diagram of an image uploading interface according to an embodiment of the present disclosure;
FIG. 4 is a schematic diagram of an encoding and decoding structure according to an embodiment of the present disclosure;
FIG. 5 is a schematic diagram of a feature fusion process according to an embodiment of the present disclosure;
FIG. 6 is a schematic diagram of an image description generation apparatus according to an embodiment of the present disclosure; and
FIG. 7 is a structural schematic diagram of an electronic device according to an embodiment of the present disclosure.

### DETAILED DESCRIPTION OF EMBODIMENTS

Terms "first" and "second" in embodiments of the present disclosure are merely used for the description purpose but not understood as indicating or implying relative importance or implicitly indicating the number of indicated technical features. Thus, features defined with "first" and "second" may explicitly or implicitly include one or more of the features.

Firstly, some technical terms involved in the embodiments of the present disclosure are introduced.

Image processing refers to the technology of analyzing images using a computer to achieve needed results. The image processing technology generally includes image compression, enhancement and restoration, matching, description, recognition, etc.

Natural language refers to a language used by humans in daily life, which is an important means of human communication and an essential feature distinguishing humans from other animals.

Typically, an image may include a target object. For example, the image may include a product, and the product may be a bracelet, a headphone, and other items. Through a natural language description for the image, a user can directly understand the content of the image, such as the bracelet and the headphone included in the image.

In an e-commerce scenario, a recommendation system needs to extract the natural language description for the product in the image based on the image of the product, thereby ensuring a recommendation effect of a downstream recommendation task. Therefore, the natural language description for the image needs to be accurately extracted. Currently, visual information included in the image is adopted to automatically generate the natural language description for the image. However, a matching degree between the natural language description generated only based on the visual information and the product in the image is low, and the limited amount of image information available makes it difficult to meet business requirements.

In view of this, an embodiment of the present disclosure provides an image description generation method. The method is applied to an electronic device. The electronic device refers to a device having a data processing capability, such as a server or a terminal. The terminal includes, but is not limited to, a smart phone, a tablet, a notebook computer, a personal digital assistant (PDA), a smart wearable device, or the like. The server may be a cloud server, such as a central server in a central cloud computing cluster or an edge server in an edge cloud computing cluster. Of course, the server may also be a server in a local data center. The local data center is a data center directly controlled by the user.

Specifically, the method includes: the electronic device obtains an image of a target object; then, a label feature of the target object, a position feature of the target object in the image, a text feature in the image, and a visual feature of the target object are respectively extracted from the image; and then, a natural language description for the image is generated based on the label feature, the position feature, the text feature, the visual feature, and a visual linguistic model.

Apparently, in this method, the visual feature is extracted from the image, and meanwhile the label feature of the target object, the position feature of the target object in the image, and the text feature in the image are extracted, such that more effective information is provided from the image, thereby making the generated natural language description better match the target object in the image. Further, when the natural language description for the target object highly matches the target object, the recommendation system can achieve a better recommendation effect based on the more accurate natural language description.

As mentioned above, the method may be performed by the server alone, or collaboratively performed by the terminal and the server. For ease of understanding, taking the collaborative execution by the terminal and the server as an example, the recommendation system (e.g., a product recommendation system) may be formed by the terminal and the server. When applied to the recommendation system, the method may be specifically implemented in the form of a computer program. In some embodiments, the computer program may be independent, such as a standalone application with corresponding functionality. In some other embodiments, the computer program may be a functional module, a plug-in, or the like, which is attached to an existing application to run.

For example, the recommendation system may obtain an image including a bracelet and then generate a natural language description for the bracelet. Then, an augmentation strategy for the bracelet is determined based on the natural language description for the bracelet. Finally, the bracelet is promoted based on the determined augmentation strategy. Since the generated natural language description better matches the bracelet, the recommendation system can achieve a better augmentation effect when promoting the bracelet based on the more accurate natural language description.

To make the technical solution of the present disclosure clearer and easier to understand, an architecture of the recommendation system provided in the embodiments of the present disclosure is described in conjunction with the accompanying drawings as below.

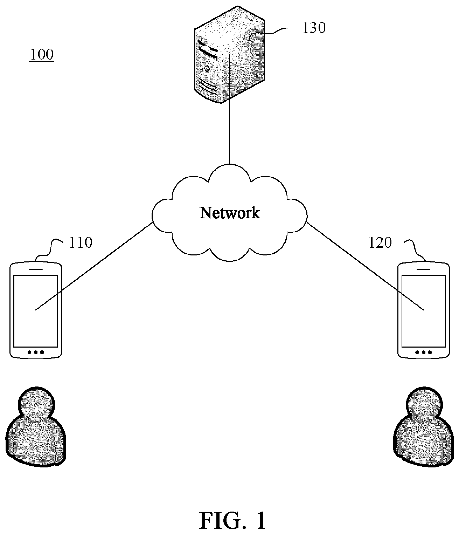

Referring to a system architecture diagram of a recommendation system 100 shown in FIG. 1, the recommendation system 100 includes a terminal 110, a terminal 120, and a server 130. The terminal 110, the terminal 120, and the server 130 are connected through a network. The terminal 110 may be a merchant terminal, and a merchant publishes products based on the merchant terminal. The terminal 120 may be a user terminal, and a user may browse, based on the user terminal, the products published by the merchant.

In some examples, the merchant may send an image including a product to the server 130 through the terminal 110. The server 130 may process the image of the product to obtain a natural language description for the image, then determine, based on the natural language description for the image, an augmentation strategy for the product, and promote the product based on the augmentation strategy. For example, the server 130 pushes an advertisement to the terminal 120 to promote the product to the user of the terminal 120.

It is apparent that when the natural language description for the product generated by the server 130 highly matches the product, the augmentation strategy determined based on the accurate natural language description is also more precise, thereby achieving a better match between the user and the product, and improving the augmentation effect and a conversion rate.

To make the technical solution of the present disclosure clearer and easier to understand, the image description generation method provided in the embodiments of the present disclosure is described from the perspective of the terminal 110, the terminal 120, and the server 130.

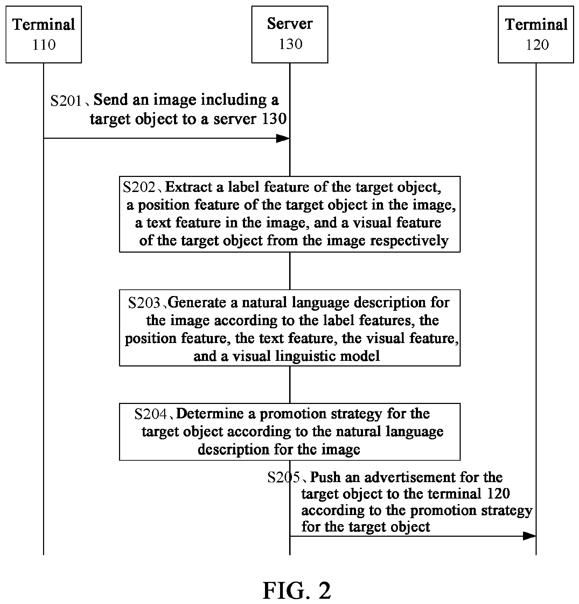

As shown in FIG. 2, FIG. 2 is a flowchart of an image description generation method according to an embodiment of the present disclosure. The method includes:
S201: a terminal 110 sends an image including a target object to a server 130.

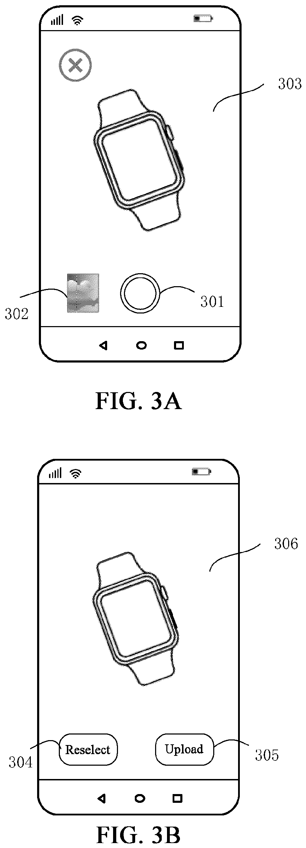

In some embodiments, as shown in FIG. 3A, FIG. 3A is a schematic diagram of an image obtaining interface according to an embodiment of the present disclosure. The terminal 110 may present the image obtaining interface to the merchant, and the image obtaining interface includes a shooting control 301, an album control 302, and a preview screen 303. The preview screen 303 may be a video stream captured by a camera of the terminal.

The merchant may upload the image including the target object through a plurality of methods. In some examples, the merchant may tap on the shooting control 301 to shoot the target object (e.g., the product), thereby obtaining the image including the target object. In some other examples, the merchant may tap on the album control 302 to select the pre-stored image including the target object from an album.

As shown in FIG. 3B, FIG. 3B is a schematic diagram of an image uploading interface according to an embodiment of the present disclosure. The image uploading interface includes a reselect control 304, an upload control 305, and a preview image 306. After the merchant captures the image including the target object through the shooting control 301 or selects the image including the target object through the album control 302, the interface presented by the terminal 110 is switched to the image uploading interface shown in FIG. 3B from the image obtaining interface shown in FIG. 3A. The preview image 306 may be displayed on the image uploading interface, such that the merchant knows the selected image. Then, when the merchant is not satisfied with the preview image 306, the merchant may reselect an image from the album or retake an image by tapping on the reselect control 304; or the merchant may directly upload the image including the target object (e.g., the image corresponding to the preview image 306) to the server 130 by tapping on the upload control 305.

It should be noted that the above is merely an example that the terminal 110 sends the image including the target object to the server 130. Those skilled in the art may choose an appropriate method based on actual needs to enable the server 130 to obtain the image including the target object.

S202: the server 130 respectively extracts a label feature of the target object, a position feature of the target object in the image, a text feature in the image, and a visual feature of the target object from the image.

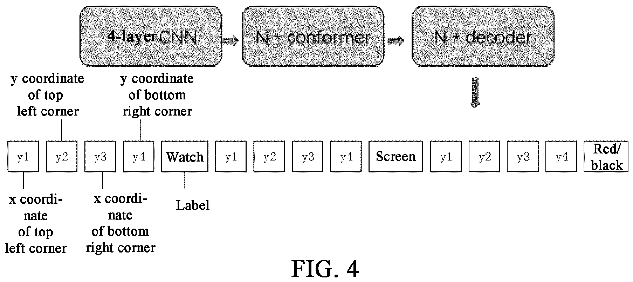

In some embodiments, as shown in FIG. 4, FIG. 4 is a schematic diagram of an encoding and decoding structure according to an embodiment of the present disclosure. After obtaining an image including a target object, the server 130 extracts a position of the target object in the image and a label of the target object by sequentially passing the image through a convolutional neural network, an encoding structure, and a decoding structure. Then, a position feature in the image is obtained according to position coordinates of the target object in the image, and a label feature of the target object are obtained according to the label of the target object.

The encoding and decoding structure may include a 4-layer convolutional neural network, an N-layer conformer (encoder) structure, and an N-layer decoder structure. The position coordinates may be coordinates of a top left corner and a bottom right corner of the target object in the image. Based on the coordinates of the top left corner and the bottom right corner, a rectangular area where the target object is located can be determined, which is a regional image corresponding to the target object. Then, based on the regional image corresponding to the target object, a visual feature of the target object is obtained, rather than being obtained based on the entire image. Therefore, the visual feature can better represent the target object.

The label of the target object may be a single word or a plurality of words. For example, when the label is a single word, the word may be "black", etc.; and when the label is composed of a plurality of words, the plurality of words may be "watch", "screen", etc. In other words, in the embodiments of the present disclosure, the label is not limited to a single word.

It should be noted that the specific content of the above label is illustrative only.

After obtaining the position coordinates and the label of the target object, the server 130 respectively performs vectorization processing on the position coordinates and the label of the target object. For example, through position embedding, the position coordinates are converted into a sequence of length 768, and through token embedding, the label is converted into a sequence of length 768.

It should be noted that the above sequence of length 768 is just an example, and sequences of other lengths may also be used in some other examples.

Then, the server 130 may determine the regional image corresponding to the target object from the image based on the position coordinates of the target object in the image, and then obtain the visual feature of the target object according to the regional image corresponding to the target object. In some examples, the server 130 may obtain a region corresponding to the target object based on a feature map obtained by passing the image through the convolutional neural network, and then, converts the feature map into the sequence of length 768 as the visual feature of the target object.

The server 130 may process the image by means of an optical character recognition (OCR) technology to extract a text from the image, and then obtain a text feature in the image based on the text in the image. After obtaining the text in the image, the server 130 performs vectorization processing on the text, such as segment embedding, to convert the text into the sequence of length 768.

In this embodiment of the present disclosure, both the visual feature and other features (e.g., the text feature, the position feature, and the label feature) in the image are selected, such that the model can fully understand the image, thereby generating a more accurate natural language description, and making the natural language description better match the image.

S203: the server 130 generates a natural language description for the image according to the label feature, the position feature, the text feature, the visual feature, and the visual linguistic model.

In some embodiments, the server may first fuse the label feature, the position feature, the text feature, and the visual feature by means of an addition operation to obtain a fused feature. Then, the fused feature is inputted into the visual linguistic model to generate a natural language description for the image.

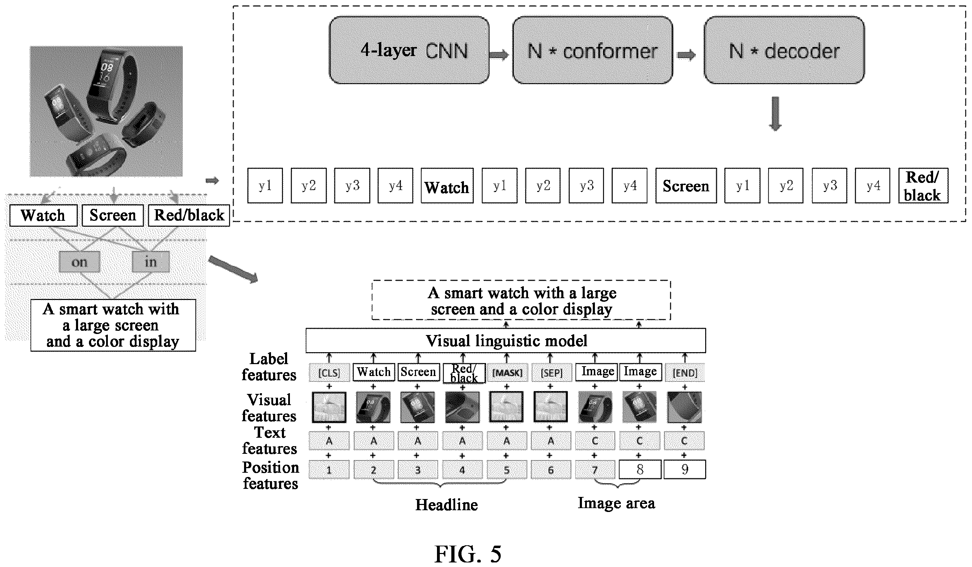

As shown in FIG. 5, FIG. 5 is a schematic diagram of a feature fusion process according to an embodiment of the present disclosure. As shown in FIG. 5, a target object may be a smart watch, and an image may be an image including the smart watch. From the figure, it can be seen that a text feature may be identified by two types of vectors. For example, when the text feature is represented by A, a corresponding label feature may be a single word. When the text feature is represented by C, a corresponding label feature may be an image. In a position feature, "1" may represent two coordinates, namely coordinates of a top left corner and a bottom right corner of the target object. For example, "1" may correspond to x and y coordinates of the top left corner and x and y coordinates of the bottom right corner. In a label feature, "CLS" is placed at the beginning as a start character; "END" is placed at the end as an end character; "SEP" is used for separating two types of input, called a separator to distinguish a text from an image; and "MASK" is used for masking some words in the text. After masking the words with "MASK", the words at the "MASK" position are predicted so as to generate more samples, thereby facilitating model training. Therefore, training of the visual linguistic model can be achieved only through a small number of original samples.

The visual linguistic model may be composed of a multi-layer encoding structure (conformer) and a multi-layer decoding structure (decoder), where the number of layers in the encoding structure may be 6, and the number of layers in the decoding structure may be 6 as well. After being added, the label feature, the position feature, the text feature, and the visual feature are inputted into the visual linguistic model, and a natural language description for the image is obtained through a fully connected (FC) layer. The natural language description may be a text. For example, an output result may be "A smart watch with a large screen and a color display".

S204: the server 130 determines an augmentation strategy for the target object according to the natural language description for the image.

S205: the server 130 pushes an advertisement for the target object to the terminal 120 according to the augmentation strategy for the target object.

After obtaining the more accurate natural language description, the server 130 can determine the more accurate augmentation strategy based on the more accurate natural language description. Then, the advertisement for the target object is pushed to the terminal 120 based on the more accurate augmentation strategy. Therefore, resource wastage on the server 130 can be reduced, and meanwhile the user on the side of the terminal 120 can more directly understand the target object, thereby improving a conversion rate.

Based on the above content description, this embodiment of the present disclosure provides the image description generation method. In this method, the visual feature is extracted from the image, and meanwhile the label feature of the target object, the position feature of the target object in the image, and the text feature in the image are extracted, such that more effective information is provided from the image, thereby making the generated natural language description better match the target object in the image. Further, when the natural language description for the target object highly matches the target object, the recommendation system can achieve a better recommendation effect based on the more accurate natural language description.

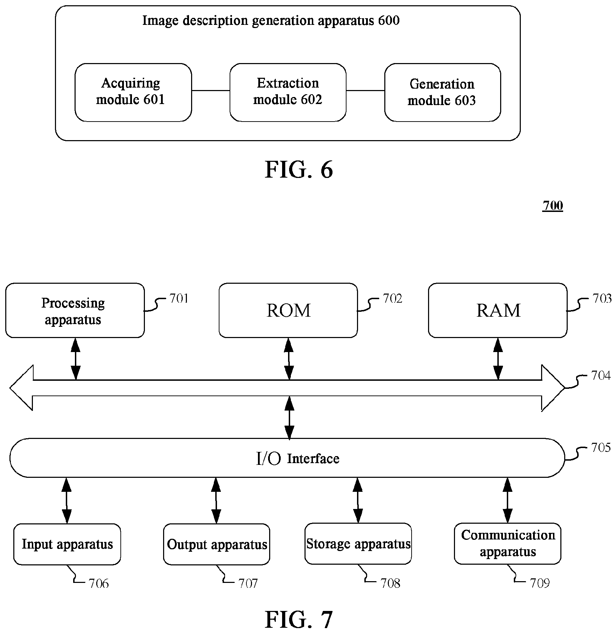

FIG. 6 is a schematic diagram of an image description generation apparatus according to an exemplary embodiment of the present disclosure. As shown in FIG. 6, the image description generation apparatus 600 includes:
an obtaining module 601, configured to obtain an image including a target object;
an extraction module 602, configured to respectively extract a label feature of the target object, a position feature of the target object in the image, a text feature in the image, and a visual feature of the target object from the image; and
a generation module 603, configured to generate a natural language description for the image according to the label feature, the position feature, the text feature, the visual feature, and a visual linguistic model.

Optionally, the generation module 603 is further configured to determine a augmentation strategy for the target object according to the natural language description for the image, where the augmentation strategy is used for promoting the target object.

Optionally, the extraction module 602 is specifically configured to extract position coordinates of the target object in the image and a label of the target object by passing the image sequentially through a convolutional neural network, an encoding structure, and a decoding structure, obtain a position feature in the image according to the position coordinates of the target object in the image, and obtain a label feature of the target object according to the label of the target object.

Optionally, the label of the target object includes at least one word.

Optionally, the extraction module 602 is specifically configured to extract a text in the image by performing optical character recognition on the image, and obtain a text feature in the image according to the text in the image.

Optionally, the extraction module 602 is specifically configured to determine a regional image corresponding to the target object from the image based on the position coordinates of the target object in the image, and obtain a visual feature of the target object according to the regional image corresponding to the target object.

Optionally, the generation module 603 is specifically configured to fuse the label feature, the position feature, the text feature, and the visual feature through an addition operation to obtain fused features, and input the fused features into the visual linguistic model to obtain a natural language description for the image.

The functions of the above modules have been elaborated in detail in the method steps of the previous embodiment, which are not repeated here.

Referring to FIG. 7 below, FIG. 7 illustrates a structural schematic diagram of an electronic device 7 suitable for implementing an embodiment of the present disclosure. The electronic device shown in FIG. 7 is merely an example and should not impose any limitations on the functionality and scope of use of embodiments of the present disclosure.

As shown in FIG. 7, the electronic device 700 may include a processing apparatus (e.g., a central processing unit and a graphics processing unit) 701 that may perform various suitable actions and processes in accordance with a program stored in a read-only memory (ROM) 702 or a program loaded from a storage apparatus 708 into a random access memory (RAM) 703 In the RAM 703, various programs and data needed by the operation of the electronic device 700 are also stored. The processing apparatus 701, the ROM 702, and the RAM 703 are connected to each other through a bus 704. An input/output (I/O) interface 705 is also connected to the bus 704.

Typically, the following apparatuses may be connected to the I/O interface 705: an input apparatus 706 including, for example, a touch screen, a touch pad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard drive; and a communication apparatus 709. The communication apparatus 709 may allow the electronic device 700 to be in wireless or wired communication with other devices for data exchange. Although FIG. 7 illustrates the electronic device 700 with various apparatuses, it should be understood that it is not necessary to implement or have all the shown apparatuses. Alternatively, more or fewer apparatuses may be implemented or provided.

Particularly, the foregoing process described with reference to the flowcharts according to the embodiments of the present disclosure may be implemented as a computer software program. For example, an embodiment of the present disclosure includes a computer program product including a computer program carried on a non-transitory computer-readable medium. The computer program includes program code for performing the method shown in the flowchart. In such embodiment, the computer program may be downloaded and installed from the network through the communication apparatus 709, or installed from the storage apparatus 708, or installed from the ROM 702. The computer program, when executed by the processing apparatus 701, performs the above functions limited in the method in the embodiments of the present disclosure.

It should be noted that the computer-readable medium in the present disclosure may be either a computer-readable signal medium or a computer-readable storage medium, or any combination of the two. For example, the computer-readable storage medium may include, but is not limited to: electrical, magnetic, optical, electromagnetic, infrared, or semiconductor systems, apparatuses, or devices, or a combination of any of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above. In the present disclosure, the computer-readable storage medium may be any tangible medium including or storing a program, and the program may be used by or in conjunction with an instruction execution system, apparatus, or device. However, in the present disclosure, the computer-readable signal medium may include data signals embodied in baseband or propagated as part of a carrier carrying computer-readable program code. Such propagated data signals may take many forms, including but not limited to, electromagnetic signals, optical signals, or any suitable combinations thereof. The computer-readable signal medium may also be any computer-readable medium other than the computer-readable storage medium that may send, propagate, or transmit a program for use by or for use in conjunction with the instruction execution system, apparatus, or device. The program code included in the computer-readable medium may be transmitted by any proper medium including but not limited to a wire, an optical cable, radio frequency (RF), etc., or any suitable combination of the above.

In some implementations, the terminal and the server may communicate using any currently known or future-developed network protocols such as a hypertext transfer protocol (HTTP), and may also be in communication connection with digital data in any form or medium (e.g., a communication network). Examples of the communication network include a local area network ("LAN"), a wide area network ("WAN"), an international network (e.g., Internet), a peer-to-peer network (e.g., an ad hoc peer-to-peer network), and any currently known or future-developed networks.

The computer-readable medium may be included in the above electronic device; and may separately exist without being assembled in the electronic device.

The computer-readable medium carries one or more programs. The one or more programs, when executed by the electronic device, enable the electronic device to: obtain an image including a target object; extract a label feature of the target object, a position feature of the target object in the image, a text feature in the image, and a visual feature of the target object from the image respectively; and generate a natural language description for the image according to the label feature, the position feature, the text feature, the visual feature, and a visual linguistic model.

The computer program code for performing the operations of the present disclosure may be written in one or more programming languages or a combination thereof. The programming languages include, but are not limited to, object-oriented programming languages such as Java, Smalltalk, and C++, as well as conventional procedural programming languages, such as "C" or similar programming languages. The program code may be executed entirely or partially on a user computer, executed as a standalone software package, executed partially on the user computer and partially on a remote computer, or entirely executed on the remote computer or the server. In the case of involving the remote computer, the remote computer may be connected to the user computer through any type of network, including a local area network (LAN) or a wide area network (WAN), or may be connected to an external computer (e.g., utilizing an Internet service provider for Internet connectivity).

The flowcharts and the block diagrams in the accompanying drawings illustrate system architectures, functions, and operations possibly implemented by the system, the method and the computer program product according to the various embodiments of the present disclosure. In this regard, each block in the flowcharts or the block diagrams may represent a module, a program segment, or a portion of code, and the module, the program segment, or the portion of code includes one or more executable instructions for implementing specified logical functions. It should also be noted that in some alternative implementations, functions noted in the blocks may also occur in an order different from that noted in the accompanying drawings. For example, two blocks shown in succession may, in fact, be executed substantially concurrently, or the blocks may sometimes be executed in the reverse order, depending upon the functionality involved. It should be further noted that each block in the block diagrams and/or the flowcharts, as well as a combination of the blocks in the block diagrams and/or the flowcharts may be implemented by using a dedicated hardware-based system that performs specified functions or operations, or using a combination of special hardware and computer instructions.

The involved modules described in the embodiments of the present disclosure may be implemented through software or hardware. The name of the module does not limit the module in certain cases. For example, a first obtaining module may also be described as a "module for obtaining at least two Internet protocol addresses".

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard part (ASSP), a system on chip (SOC), a complex programmable logic device (CPLD), etc.

In the context of the present disclosure, a machine-readable medium may be a tangible medium that may contain or store a program for use by or for use in conjunction with the instruction execution system, apparatus, or device. The machine-readable medium may be a machine-readable signal medium or a machine-readable storage medium. The machine-readable medium may include, but is not limited to: electronic, magnetic, optical, electromagnetic, infrared, or semiconductor systems, apparatuses, or devices, or any suitable combinations of the above. More specific examples of the machine-readable storage medium may include: an electrical connection based on one or more wires, a portable computer disk, a hard drive, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above content.

According to one or more embodiments of the present disclosure, example 1 provides an image description generation method. The method includes: obtaining an image including a target object; respectively extracting a label feature of the target object, a position feature of the target object in the image, a text feature in the image, and a visual feature of the target object from the image; and generating a natural language description for the image according to the label feature, the position feature, the text feature, the visual feature, and a visual linguistic model.

According to one or more embodiments of the present disclosure, example 2 provides the method according to example 1, where the method further includes: determining a augumentation strategy for the target object according to the natural language description for the image, and the augumentation strategy is used for promoting the target object.

According to one or more embodiments of the present disclosure, example 3 provides the method according to example 1, where the respectively extracting a label feature of the target object and a position feature of the target object in the image from the image includes: extracting position coordinates of the target object in the image and a label of the target object by processing the image sequentially through a convolutional neural network, an encoding structure, and a decoding structure; and obtaining a position feature in the image according to the position coordinates of the target object in the image, and obtaining a label feature of the target object according to the label of the target object.

According to one or more embodiments of the present disclosure, example 4 provides the method according to example 3, where the label of the target object includes at least one word.

According to one or more embodiments of the present disclosure, example 5 provides the method according to example 1, where the process of extracting a text feature in the image includes: extracting a text in the image by performing optical character recognition on the image; and obtaining a text feature in the image according to the text in the image.

According to one or more embodiments of the present disclosure, example 6 provides the method according to example 3, where the process of extracting a visual feature of the target object includes: determining a regional image corresponding to the target object from the image based on position coordinates of the target object in the image; and obtaining a visual feature of the target object according to the regional image corresponding to the target object.

According to one or more embodiments of the present disclosure, example 7 provides the method according to any one of examples 1 to 6, where the generating a natural language description for the image according to the label feature, the position feature, the text feature, the visual feature, and a visual linguistic model includes: fusing the label feature, the position feature, the text feature, and the visual feature through an addition operation to obtain fused features; and inputting the fused features into the visual linguistic model to generate a natural language description for the image.

What are described above are only preferred embodiments of the present disclosure and illustrate the technical principles employed. Those skilled in the art should understand that the scope of open in the present disclosure is not limited to the technical solutions formed by specific combinations of the above technical features, and also covers other technical solutions formed by arbitrary combinations of the above technical features or equivalent features without departing from the concept of the present disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Certain features described in the context of separate embodiments may also be implemented in combination in a single embodiment. Conversely, various features described in the context of a single embodiment may also be implemented separately or in any suitable sub-combination in a plurality of embodiments.

Although the subject has been described by adopting language specific to structural features and/or method logical actions, it should be understood that the subject limited in the appended claims is not necessarily limited to the specific features or actions described above. On the contrary, the specific features and actions described above are merely example forms for implementing the claims. Regarding the apparatus in the above embodiments, the specific method in which each module performs operations has been described in detail in the embodiments related to the method, which will not be set forth in detail here.

## Claims

1. A image description generation method, comprising:
obtaining an image comprising a target object;
extracting a label feature of the target object, a position feature of the target object in the image, a text feature in the image, and a visual feature of the target object from the image respectively; and
generating a natural language description for the image according to the label feature, the position feature, the text feature, the visual feature, and a visual linguistic model.

2. The method according to claim 1, further comprising:
determining an augmentation strategy for the target object according to the natural language description for the image, wherein the augmentation strategy is used for promoting the target object.

3. The method according to claim 1, wherein extracting the label feature of the target object and the position feature of the target object in the image from the image respectively comprises:
extracting position coordinates of the target object in the image and a label of the target object by passing the image sequentially through a convolutional neural network, an encoding structure, and a decoding structure; and
obtaining the position feature in the image according to the position coordinates of the target object in the image, and obtaining the label feature of the target object according to the label of the target object.

4. The method according to claim 3, wherein the label of the target object comprises at least one word.

5. The method according to claim 1, wherein the process of extracting the text feature in the image comprises:
extracting text in the image by performing optical character recognition on the image; and
obtaining the text feature in the image according to the text in the image.

6. The method according to claim 3, wherein the process of extracting the visual feature of the target object comprises:
determining a regional image corresponding to the target object from the image based on the position coordinates of the target object in the image; and
obtaining the visual feature of the target object according to the regional image corresponding to the target object.

7. The method according to any one of claims 1 to 6, wherein generating the natural language description for the image according to the label feature, the position feature, the text feature, the visual feature, and the visual linguistic model comprises:
fusing the label feature, the position feature, the text feature, and the visual feature by means of an addition operation to obtain a fused feature; and
inputting the fused feature into the visual linguistic model to generate the natural language description for the image.

8. An image description generation apparatus, comprising:
an obtaining module, configured to obtain an image comprising a target object;
an extraction module, configured to extract a label feature of the target object, a position feature of the target object in the image, a text feature in the image, and a visual feature of the target object from the image respectively; and
a generation module, configured to generate a natural language description for the image according to the label feature, the position feature, the text feature, the visual feature, and a visual linguistic model.

9. An electronic device, comprising:
a storage apparatus storing a computer program thereon; and
a processing apparatus for executing the computer program in the storage apparatus to implement the method according to any of claims 1 to 7.

10. A computer-readable storage medium, storing a computer program thereon, wherein the program, when executed by a processing apparatus, implements the method according to any of claims 1 to 7.

11. A computer program product, wherein the computer program product, when running on a computer, causes the computer to perform the method according to any of claims 1 to 7.
